# EUROPEAN PATENT APPLICATION

(11) **EP 4 265 932 A1**
(43) Date of publication of application: **25.10.2023**
(21) Application number: 21906524.0
(22) Date of filing: 10.12.2021
(51) Int. Cl.: F16D 41/066, F16D 41/08, B60N 2/16

(54) **CLUTCH UNIT**

(30) Priority: 18.12.2020 JP 2020210345
(71) Applicant: NTN Corporation, Osaka-shi, Osaka 550-0003 (JP); Shiroki Corporation, Fujisawa-shi, Kanagawa 252-0811 (JP)
(72) Inventor: SASANUMA, Kyohei, Iwata-shi Shizuoka 438-8510 (JP); MIKASA, Kunihiro, Fujisawa-shi, Kanagawa 252-0811 (JP)
(74) Representative: Barth, Michael
(86) International application number: PCT/JP2021/045591
(87) International publication number: WO 2022/131162

(57) **Abstract**

Provided is a clutch unit (1) including: a static system (housing (40)); an output shaft (30); a first clutch part (10); and a second clutch part (20). The first clutch part (10) includes: an input rotary body including an inner ring (13); an output rotary body including an outer ring (14); and a plurality of cylindrical rollers (15) disposed therebetween. The clutch unit (1) includes: a rotation suppressing member (70) configured to apply rotational resistance to the output rotary body of the first clutch part (10); and rotation stopping mechanisms (80) (recessed portions (71) of the rotation suppressing member (70) and extending portions (41) of the housing (40)) configured to restrict rotation of the rotation suppressing member (70) with respect to the housing (40).

## Description

### Technical Field

The present invention relates to a clutch unit.

### Background Art

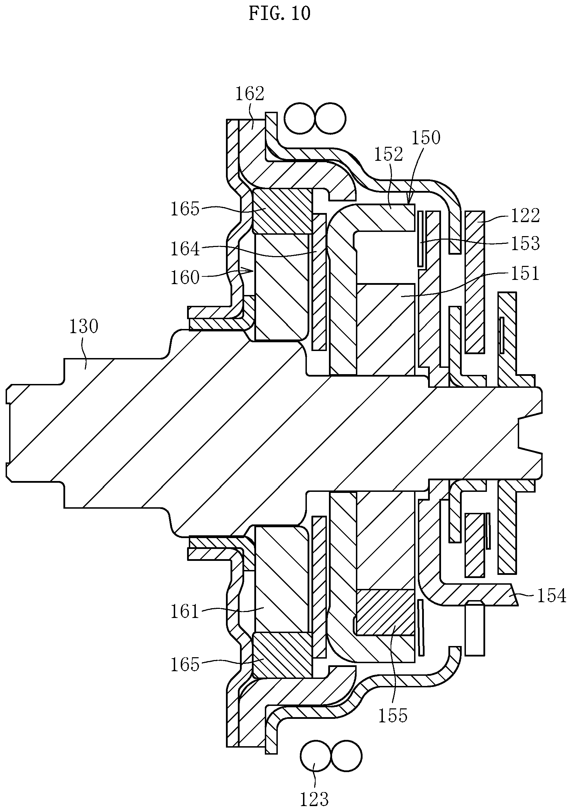

In Patent Literature 1, there is described a clutch unit provided to a seat lifter device for a vehicle. As illustrated in FIG. 10, the clutch unit includes an input clutch part 150 and an output clutch part 160. The input clutch part 150 includes an inner ring 151, an outer ring 152, and cylindrical rollers 155. The output clutch part 160 includes an inner ring 161, an outer ring 162, and cylindrical rollers 165. An operating lever (not shown) is fixed to the inner ring 151 of the input clutch part 150 through intermediation of an operating bracket 154 and an operating plate 122. The inner ring 151 of the input clutch part 150, the operating bracket 154, the operating plate 122, and the operating lever rotate together. A return spring 123 that urges the above-mentioned parts in a direction of returning to their neutral positions is provided.

When the operating lever is operated to rotate the inner ring 151 of the input clutch part 150 to one side or another side from the neutral position, a rotational torque generated through the rotation is transmitted to the outer ring 152 via the cylindrical rollers 155 to thereby rotate the outer ring 152. The rotational torque is transmitted to an output shaft 130 via a release bracket 164 and the inner ring 161 of the output clutch part 160 to rotationally drive the output shaft 130.

Meanwhile, when a force for operating the operating lever is released, the inner ring 151 of the input clutch part 150 is rotated in a direction of returning to its neutral position by an elastic force of the return spring 123. In this case, engagement in a rotating direction between the output ring 152 and the inner ring 151 through intermediation of the cylindrical rollers 155 of the input clutch part 150 is cancelled to shut off the rotational torque. As a result, the inner ring 151 is rotated in a returning direction to return to the neutral position. Meanwhile, the outer ring 152, and the release bracket 164, the inner ring 161, and the output shaft 130, which operate in association with the outer ring 152, stay in place without being rotated in the returning direction. Thus, the output shaft 130 can be intermittently rotated in one direction (for example, a direction of elevating a seat) by repeating the rotating operation and the returning operation of the operating lever.

### Citation List

Patent Literature 1: JP 2019-210948 A

### Summary of Invention

### Technical Problem

In the clutch unit illustrated in FIG. 10, as described above, the inner ring 151 of the input clutch part 150 is rotated in the returning direction when the operating lever is returned to the neutral position, but the rotation is not transmitted to the outer ring 152. Thus, the outer ring 152 is not rotated. At this time, however, dragging of the outer ring 152 is sometimes caused along with the rotation of the inner ring 151 in the returning direction by frictional forces generated at contact portions between the inner ring 151 and the cylindrical rollers 155 and at contact portions between the cylindrical rollers 155 and the outer ring 152 of the input clutch part 150. In this case, next time the operating lever is rotated from the neutral position, an internal loss may be generated in the clutch unit, resulting in a reduction in power transmission efficiency.

To deal with this problem, the clutch unit described in Patent Literature 1 includes a wave washer 153 that applies rotational resistance to the outer ring 152 of the input clutch part 150. More specifically, the wave washer 153 is arranged between the outer ring 152 and the operating bracket 154 of the input clutch part 150 in an axial direction. An integrated body of the outer ring 152 and the release bracket 164 is urged toward the output side (left side of FIG. 10) by the wave washer 153 so that the integrated body is pressed against a member that is not rotated when the operating lever is returned to the neutral position (for example, the cylindrical rollers 165 of the output clutch part 160). As a result, rotational resistance is applied to the outer ring 152 of the input clutch part 150 to thereby prevent the dragging of the outer ring 152, which may be caused along with the rotation of the inner ring 151 in the returning direction.

However, the wave washer 153 is pressed against the operating bracket 154 and the outer ring 152. Thus, the rotation of the operating bracket 154 in the returning direction may be transmitted to the outer ring 152 via the wave washer 153 to cause the dragging of the outer ring 152.

Thus, the present invention has an object to reliably prevent dragging of an outer ring, which may be caused by rotation of an inner ring of an input clutch part (first clutch part) when the inner ring is returned to its neutral position, so as to prevent a reduction in power transmission efficiency in the clutch unit described above.

### Solution to Problem

In order to solve the above-mentioned problem, according to the present invention, there is provided a clutch unit, comprising: a static system; an output shaft configured to be rotatable with respect to the static system; a first clutch part, which comprises an input rotary body, an output rotary body, and a plurality of engaging elements disposed between the input rotary body and the output rotary body, the first clutch part, and is configured to transmit a rotational torque, which is generated when the input rotary body is rotated from a neutral position, to the output rotary body and shut off a rotational torque, which is generated when the input rotary body is returned to the neutral position; a second clutch part configured to transmit a rotational torque of the output rotary body of the first clutch part to the output shaft and shut off a rotational torque from the output shaft to the output rotary body of the first clutch part; a rotation suppressing member configured to apply rotational resistance to the output rotary body; and a rotation stopping mechanism configured to restrict rotation of the rotation suppressing member with respect to the static system.

As described above, according to the present invention, the rotation of the rotation suppressing member with respect to the static system is restricted by the rotation stopping mechanism. As a result, when the input rotary body of the first clutch part is rotated in a direction of returning to the neutral position, the dragging of the output rotary body, which may be caused by the transmission of the rotation of the input rotary body to the output rotary body via the rotation suppressing member, can be prevented.

The rotation stopping mechanism may comprise, for example, an engaging portion provided to the static system; and an engaged portion, which is provided to the rotation suppressing member, and is configured to be fitted over the engaging portion in a circumferential direction. When the engaging portion and the engaged portion are engaged with each other in the circumferential direction, the rotation of the rotation suppressing member with respect to the static system is restricted. In this case, when the engaging portion and the engaged portion have a gap in the circumferential direction (rotating direction) therebetween, the rotation suppressing member may be rotated by the amount of gap and the input rotary body may be slightly rotated along with the rotation of the rotation suppressing member. Thus, it is preferred that the engaging portion and the engaged portion be fitted together with an interference in the circumferential direction so as to completely eliminate the gap in the circumferential direction therebetween.

The rotation stopping mechanism may comprise: a plurality of engaging portions provided to the static system; and a plurality of engaged portions, which are provided to the rotation suppressing member, and are configured to be fitted over the plurality of engaging portions in the circumferential direction. In this case, when a circumferential pitch of the plurality of engaging portions and a circumferential pitch of the plurality of engaged portions are set to be different from each other, the engaging portions and the engaged portions can be brought into abutment against each other with an interference in the circumferential direction.

The first clutch part may comprise, for example, a wedge gap defined between the input rotary body and the output rotary body and an urging member that urges the engaging elements to smaller width sides of the wedge gap. Normally, when the engaging element is pushed to the smaller width side of the wedge gap by the urging member, the input rotary body and the output rotary body are brought into a state in which a torque is transmittable via the engaging element (so-called "constant mesh-type clutch"). In this case, when the input rotary body is returned to the neutral position, the dragging of the output rotary body is liable to be caused via the engaging elements. Thus, it is particularly effective to provide the rotation suppressing member and the rotation stopping mechanism.

### Advantageous Effects of Invention

As described above, the clutch unit according to the present invention can prevent the dragging of the output rotary body, which may be caused via the rotation suppressing member when the input rotary body of the first clutch part is returned to the neutral position. As a result, an internal loss of the clutch unit can be reduced, and power transmission efficiency can be enhanced.

### Brief Description of Drawings

FIG. 1 is a side view of a seat lifer device for an automobile.
FIG. 2 is a sectional view of a clutch unit according to an embodiment of the present invention.
FIG. 3 is a sectional view of a first clutch part of the clutch unit (sectional view taken along the line A-A of FIG. 2) under a state in which an operating lever is in a neutral position.
FIG. 4 is a sectional view of a second clutch part of the clutch unit (sectional view taken along the line B-B of FIG. 2) under a state in which the operating lever is in the neutral position.
FIG. 5 is a sectional view corresponding to FIG. 3 under a state in which the operating lever is operated and a torque is being transmitted.
FIG. 6 is a sectional view corresponding to FIG. 4 under a state in which the operating lever is operated and a torque is being transmitted.
FIG. 7 is a sectional view taken along the line C-C of FIG. 2, for illustrating rotation stopping mechanisms for a rotation suppressing member.
FIG. 8 is a sectional view for illustrating another example of the rotation stopping mechanisms for the rotation suppressing member.
FIG. 9 is a sectional view for illustrating a still another example of the rotation stopping mechanisms for the rotation suppressing member.
FIG. 10 is a sectional view of a related-art clutch unit.

### Description of Embodiments

Now, an embodiment of the present invention is described with reference to the drawings. In the following embodiment, a clutch unit incorporated into a seat lifter device for an automobile is exemplified. However, the clutch unit according to the present invention is applicable to devices other than a seat lifter device for an automobile.

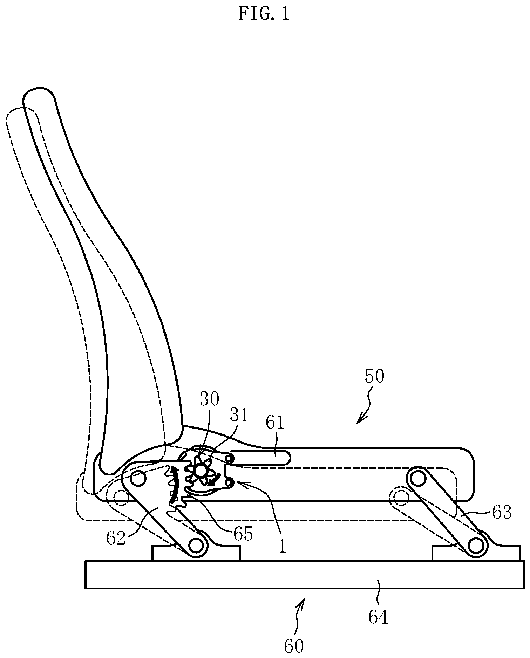

In FIG. 1, illustration is given of a seat lifter device 60 configured to adjust a seating surface height of a seat 50 of an automobile. The seat lifter device 60 comprises an operating lever 61, a clutch unit 1, and link members 62 and 63. Lower ends of the link members 62 and 63 are pivotably mounted onto a slide member 64 that is provided so as to be slidable in a front-and-rear direction with respect to a vehicle body. Upper ends of the link members 62 and 63 are pivotably mounted onto a frame of the seat 50. A sector gear 65 is formed integrally with the upper end of the link member 62. A pinion gear part 31 to be meshed with the sector gear 65 is provided to an output shaft 30 of the clutch unit 1.

For example, when a seating surface of the seat 50 is to be lowered, the operating lever 61 is turned downward. As a result, the output shaft 30 of the clutch unit 1 is rotated to pivot the pinion gear part 31 provided to the output shaft 30 in a clockwise direction (direction indicated by an arrow of FIG. 1). Then, the sector gear 65, which is meshed with the pinion gear part 31, is turned in a counterclockwise direction (direction indicated by an arrow of FIG. 1) to incline both of the link members 62 and 63. As a result, the seating surface of the seat 50 is lowered.

When a force for pressing down the operating lever 61 is released, the operating lever 61 is turned upward and is returned to its original position (neutral state). A rotational torque generated in this operation is shut off by the clutch unit 1. Thus, the output shaft 30 and the pinion gear part 31 are not rotated, and thus a position of the seating surface of the seat 50 is maintained. After that, the seating surface is lowered to a desired position by repeating an operation of pressing down and releasing the operating lever 61. When the operating lever 61 is turned upward, the seating surface height of the seat 50 is raised through a reverse operation to the above-mentioned operation.

Further, when a passenger is seated on the seat 50 and a rotational torque is reversely input to the output shaft 30, the reversely input torque is shut off by the clutch unit 1, and thus the seating surface height of the seat 50 is kept.

Now, a structure of the clutch unit 1 is described in detail.

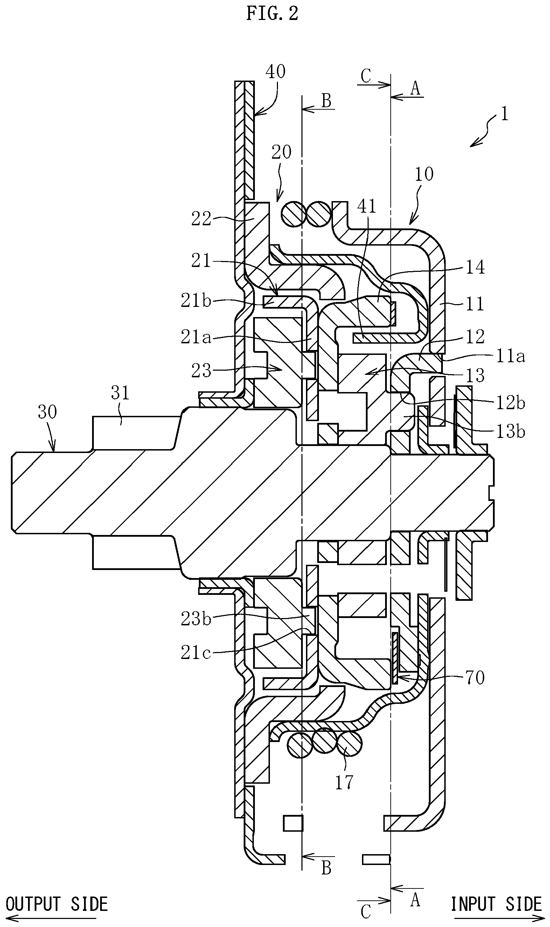

As illustrated in FIG. 2, the clutch unit 1 comprises a first clutch part 10, a second clutch part 20, the output shaft 30, and a housing 40. The output shaft 30 is inserted through inner peripheries of the first clutch part 10 and the second clutch part 20. The housing 40 is a static system that is fixed to the frame of the seat 50. The output shaft 30 is provided so as to be rotatable with respect to the housing 40. In the following description, an axial center direction of the output shaft 30 is referred to as "axial direction", the first clutch part 10 side (right side of FIG. 2) in the axial direction is referred to as "input side", and the second clutch part 20 side (left side of FIG. 2) is referred to as "output side".

The first clutch part 10 is configured to control transmission and shutoff of a rotational torque input from the operating lever 61 (see FIG. 1). The second clutch part 20 is configured to transmit the rotational torque from the first clutch part 10 to the output shaft 30 and has a reverse-input shutoff function of shutting off a rotational torque that is reversely input from the output shaft 30.

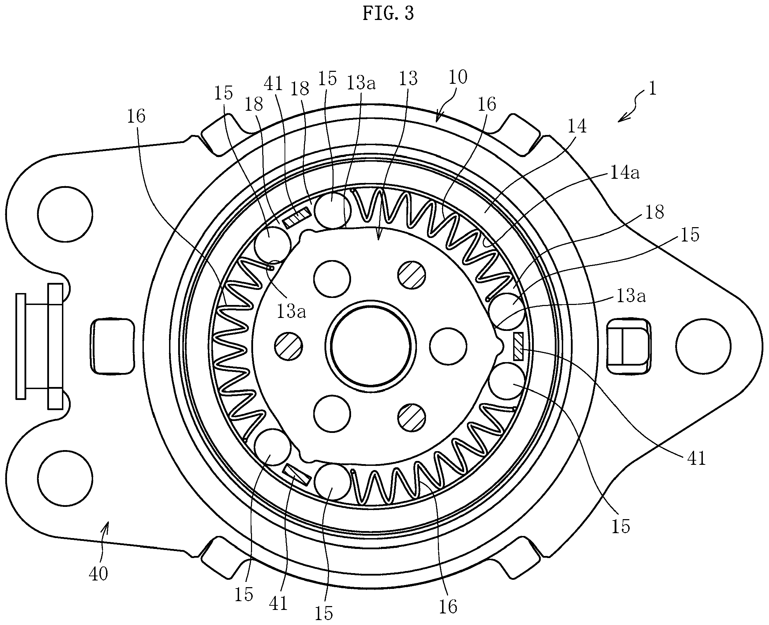

As illustrated in FIG. 2 and FIG. 3, the first clutch part 10 comprises a side plate 11, an operating bracket 12, an inner ring 13, an outer ring 14, cylindrical rollers 15, roller urging springs 16, and a centering spring 17. The side plate 11, the operating bracket 12, and the inner ring 13 correspond to an input rotary body. The outer ring 14 corresponds to an output rotary body. The cylindrical rollers 15 correspond to a plurality of engaging elements. Each of the roller urging springs 16 corresponds to an urging member.

As illustrated in FIG. 2, an end portion of the operating bracket 12 is inserted into a hole 11a formed in the side plate 11 and is fixed to the side plate 11 by, for example, caulking. A protrusion 13b formed on an input-side end surface of the inner ring 13 is fitted and inserted into a hole 12b formed in the operating bracket 12. In the above-mentioned manner, the side plate 11, the operating bracket 12, and the inner ring 13 are integrated. The operating lever 61 (see FIG. 1) is mounted onto the side plate 11. When the operating lever 61 is operated, the side plate 11, the operating bracket 12, and the inner ring 13 are rotated together.

An outer periphery of the inner ring 13 has a plurality of cam surfaces 13a (see FIG. 3). Wedge gaps 18 are defined between the cam surfaces 13a of the inner ring 13 and an inner peripheral surface 14a of the outer ring 14, which has a cylindrical shape. Each of the wedge gaps 18 has a radial width decreasing toward one side or another side in a circumferential direction. The cylindrical rollers 15 are arranged between the inner ring 13 and the outer ring 14. The roller urging springs 16 and extending portions 41 provided in the housing 40 are arranged alternately in the circumferential direction between the cylindrical rollers 15 adjacent to each other. Each pair of cylindrical rollers 15 adjacent to each other is urged by the roller urging spring 16 so that the cylindrical rollers 15 are separated apart from each other and are pushed toward smaller width sides of the wedge gap 18 defined between the cam surface 13a of the inner ring 13 and the inner peripheral surface 14a of the outer ring 14.

The centering spring 17 (see FIG. 2) retains the input rotary body comprising the side plate 11 in a neutral position. When the operating lever 61 is operated to rotate the side plate 11 to one side or another side from the neutral position, the side plate 11 and the centering spring 17 are engaged with each other and an elastic force is accumulated in the centering spring 17. When a force applied to the operating lever 61 is released, the input rotary body comprising the side plate 11 is returned to the neutral position by the elastic force of the centering spring 17.

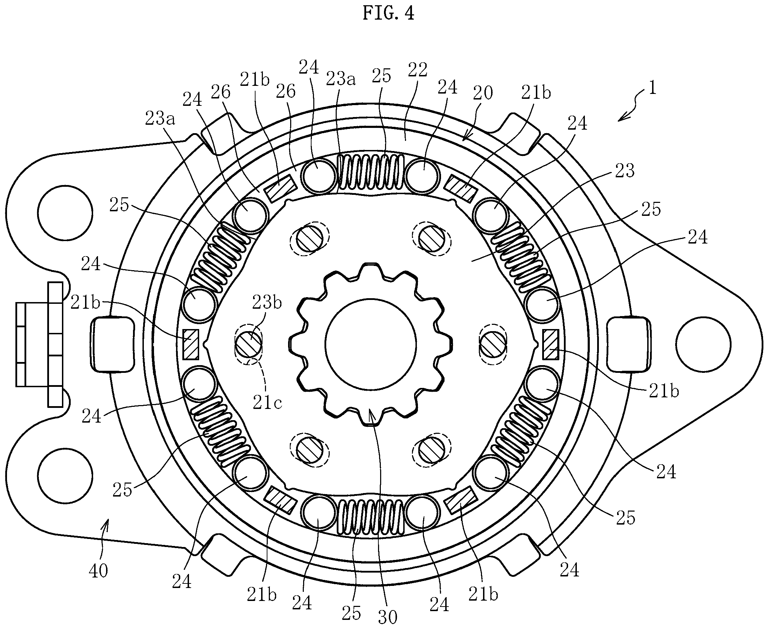

As illustrated in FIG. 2 and FIG. 4, the second clutch part 20 comprises a release bracket 21, an outer ring 22, an inner ring 23, a plurality of cylindrical rollers 24, and roller urging springs 25.

The release bracket 21 comprises a flat plate portion 21a and extending portions 21b (see FIG. 2). The flat plate portion 21a is fixed to the outer ring 14 of the first clutch part 10. The extending portions 21b extend to the output side in the axial direction from a plurality of positions on an outer peripheral edge of the flat plate portion 21a. The extending portions 21b are arranged between the cylindrical rollers 24 adjacent to each other (at positions where the roller urging springs 25 are not provided) (see FIG. 4).

The outer ring 22 is fixed to the housing 40 (see FIG. 2). The inner ring 23 is fixed to an outer periphery of the output shaft 30. In the illustrated example, the inner ring 23 and the output shaft 30 are fixed by spline fitting (see FIG. 4). An outer periphery of the inner ring 23 has a plurality of cam surfaces 23a that are arranged equiangularly. Wedge gaps 26 are defined between the cam surfaces 23a of the inner ring 23 and an inner peripheral surface of the outer ring 22, which has a cylindrical shape. Each of the wedge gaps 26 has a radial width decreasing toward one side or another side in the circumferential direction.

The cylindrical rollers 24 are arranged between the inner ring 23 and the outer ring 22. The roller urging springs 25 are provided between the cylindrical rollers 24 adjacent to each other. Each pair of cylindrical rollers 24 adjacent to each other is urged by the roller urging spring 25 so that the cylindrical rollers 24 are separated apart from each other and are pushed to smaller width sides of the wedge gap 26 defined between the cam surface 23a of the inner ring 23 and an inner peripheral surface of the outer ring 22.

Protrusions 23b are formed on an input-side end surface of the inner ring 23 (see FIG. 2). The protrusions 23b are inserted into holes 21c formed in the flat plate portion 21a of the release bracket 21 so as to each have clearances in the circumferential direction (see FIG. 4).

An operation example of the clutch unit 1 having the structure described above is now described.

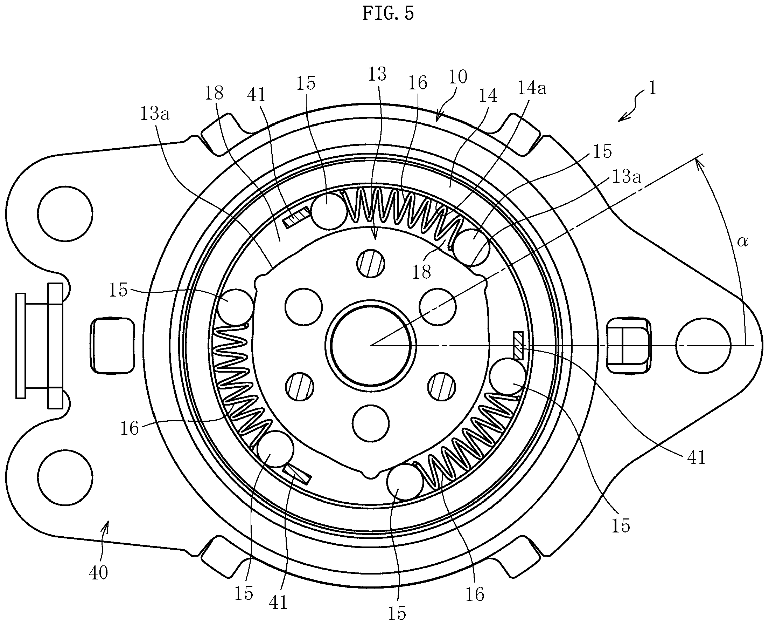

When the operating lever 61 is pulled up or pushed down, the inner ring 13 is rotated to one side or another side from the neutral position (see FIG. 3). For example, as illustrated in FIG. 5, when the inner ring 13 is rotated by an angle α in the counterclockwise direction, one cylindrical roller 15, which is on an upstream side in the rotating direction in each pair of cylindrical rollers 15 adjacent to each other with the roller urging spring 16 interposed therebetween, is engaged with the wedge gap 18 to transmit a rotational torque to the outer ring 14. Meanwhile, another cylindrical roller 15, which is on a downstream side in the rotating direction in each pair of cylindrical rollers 15 adjacent to each other with the roller urging spring 16 interposed therebetween, is brought into abutment against the extending portion 41 of the housing 40 to restrict its movement in the rotating direction. As a result, the cylindrical roller 15 on the downstream side in the rotating direction is disengaged from the wedge gap 18. Through the operation described above, a rotational torque of the inner ring 13 is transmitted to the outer ring 14 to rotate the inner ring 13 and the outer ring 14 together. At this time, an elastic force is accumulated in the centering spring 17 along with the rotation of the side plate 11.

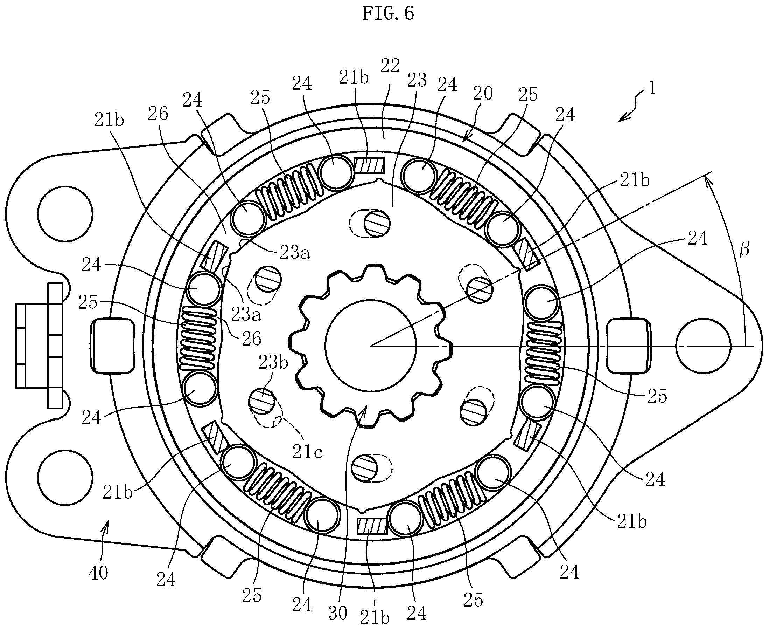

When the outer ring 14 of the first clutch part 10 is rotated in this manner, the release bracket 21 of the second clutch part 20 fixed to the outer ring 14 is rotated along therewith. Then, as illustrated in FIG. 6, each extending portion 21b of the release bracket 21 is brought into abutment against one cylindrical roller 24, which is on the upstream side in the rotating direction in each pair of cylindrical rollers 24 adjacent to each other with the roller urging spring 25 interposed therebetween, and presses the cylindrical roller 24 in the circumferential direction against an elastic force of the roller urging spring 25. As a result, the cylindrical roller 24 is disengaged from the wedge gap 26. A locked state between the inner ring 23 and the outer ring 22 is released to thereby allow the inner ring 23 and the output shaft 30 to rotate.

Then, when the release bracket 21 is further rotated, the clearance in the rotating direction between the protrusion 23b of the inner ring 23 and the hole 21c of the flat plate portion 21a of the release bracket 21 is reduced, and an inner wall of the hole 21c of the release bracket 21 is brought into abutment against the protrusion 23b of the inner ring 23 in the rotating direction. As a result, a rotational torque from the first clutch part 10 is transmitted to the inner ring 23 via the release bracket 21, and the inner ring 23 and the output shaft 30 are rotated together by an angle β.

When the input of the rotational torque by the lever operation is stopped, the input rotary body (the side plate 11, the operating bracket 12, and the inner ring 13) of the first clutch part 10 is returned to the neutral position by the elastic force of the centering spring 17. At this time, as illustrated in FIG. 5, the cylindrical rollers 15, which transmit a torque in a returning rotational direction, are disengaged from the wedge gaps 18. Thus, the rotational torque of the inner ring 13 is not transmitted to the outer ring 14, and the outer ring 14 maintains a given rotational position. Accordingly, the rotational torque is not input to the second clutch part 20, and the output shaft 30 maintains its rotational position.

When a pumping operation (vertical reciprocating movement) of the operating lever 61 (see FIG. 1) is performed as described above, the inner ring 13 of the first clutch part 10 repeats rotational reciprocating movement and the outer ring 14 is inched rotationally. Along with this rotation, the inner ring 23 of the second clutch part 20 and the output shaft 30 are inched rotationally. As a result, the seating surface height of the seat 50 can be adjusted.

In the second clutch part 20, even when the rotational torque is reversely input to the output shaft 30 as a result of seating of a passenger on the seat 50 (see FIG. 1), the cylindrical rollers 24 are engaged with the wedge gaps 26 between the outer ring 22 and the inner ring 23 to thereby lock the inner ring 23 and the output shaft 30 with respect to the outer ring 22. In this manner, the rotational torque that is reversely input from the output shaft 30 is shut off by the second clutch part 20, and backflow of the rotational torque, which is reversely input to the first clutch part 10, is shut off. As a result, the seating surface height of the seat 50 is kept.

The clutch unit 1 has the overall configuration described above. A rotation suppressing member 70 and rotation stopping mechanisms 80, which are characteristic components in the configuration, are now described in detail.

The rotation suppressing member 70 (see FIG. 2) is a member configured to apply rotational resistance to the outer ring 14 of the first clutch part 10. As the rotation suppressing member 70, an urging member that is elastically compressible in the axial direction is used. For example, a wave washer, a disc spring, or a resin ring is used. In this embodiment, a wave washer is used as the rotation suppressing member 70.

The rotation suppressing member 70 is disposed in a compressed state between the operating bracket 12 and the outer ring 14 of the first clutch part 10 in the axial direction. An input-side surface of the rotation suppressing member 70 is in contact with the operating bracket 12, and an output-side surface of the rotation suppressing member 70 is in contact with the outer ring 14. The output rotary body (the outer ring 14 in the illustrated example) and the input rotary body (the inner ring 13, the operating bracket 12, and the side plate 11 in the illustrated example) of the first clutch part 10 are urged so as to be separated apart from each other in the axial direction by an elastic force of the rotation suppressing member 70. Movement of the input rotary body to the input side is restricted by abutment of the input rotary body against the housing 40. A rotary body (integrated body of the outer ring 14 and the release bracket 21 in the illustrated example) comprising the output rotary body is urged toward the output side with respect to the housing 40 and is pressed against the inner ring 23 of the second clutch part 20.

When the operating lever 61 is returned to the neutral position, as illustrated in FIG. 5, one of each pair of adjacent cylindrical rollers 15 of the first clutch part 10 is disengaged from the wedge gap 18 as a result of abutment against the extending portion 41 of the housing 40, whereas another one of each pair of the cylindrical rollers 15 is fitted into the wedge gap 18. When the inner ring 13 is rotated in a direction of returning to the neutral position (in the clockwise direction of FIG. 5), the another cylindrical roller 15 is relatively moved to a larger width side of the wedge gap 18 and thus does not actively contribute to torque transmission to the outer ring 14. However, the another cylindrical roller 15 is in contact with the inner ring 13 and the outer ring 14. Thus, the rotation of the inner ring 13 in a returning direction may be transmitted to the outer ring 14 via the another cylindrical roller 15 by frictional forces generated at the contact portions. As a result, the outer ring 14 may be slightly dragged in the returning direction.

To deal with this problem, rotational resistance is applied to the output rotary body (outer ring 14) by the rotation suppressing member 70 in the above-mentioned clutch unit 1. More specifically, the rotary body (the outer ring 14 and the release bracket 21) comprising the outer ring 14 is pressed against the inner ring 23 of the second clutch part 20 by the elastic force of the rotation suppressing member 70 (see FIG. 2). When the operating lever 61 is returned to the neutral position, as illustrated in FIG. 6, the cylindrical rollers 24, which are not in abutment against the extending portions 21b of the release bracket 21, are pushed toward the smaller width sides of the wedge gaps 26 in the second clutch part 20. Thus, the rotation of the inner ring 23 and the cylindrical rollers 24 in the returning direction is restricted. Accordingly, when the rotary body comprising the outer ring 14 is pressed against the inner ring 23 of the second clutch part 20 that is restricted from rotating in the returning direction, the rotational resistance is applied to the outer ring 14 by the frictional forces generated at these contact portions. The rotational resistance can prevent the dragging of the outer ring 14, which may be caused along with the rotation of the inner ring 13 of the first clutch part 10 in the returning direction.

At this time, when the rotation suppressing member 70 itself is rotated by the frictional force generated at the contact portion with the operating bracket 12 in the returning direction along with the inner ring 13, the dragging of the outer ring 14 may be caused via the rotation suppressing member 70. Thus, the clutch unit 1 comprises the rotation stopping mechanisms 80 configured to restrict the rotation of the rotation suppressing member 70 with respect to the static system (housing 40) .

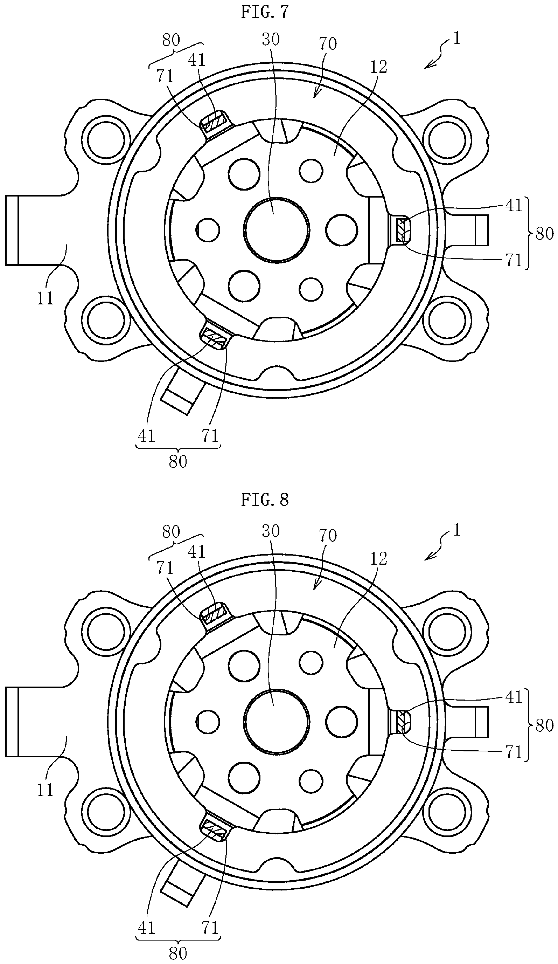

As the rotation stopping mechanisms 80, for example, engaging portions and engaged portions are provided. The engaging portions are provided to the housing 40. The engaged portions are provided to the rotation suppressing member 70 and are configured to be fitted over the engaging portions in the circumferential direction. In this embodiment, as illustrated in FIG. 7, recessed portions 71 are formed in the rotation suppressing member 70 as the engaged portions. More specifically, a plurality of recessed portions 71, each being open at an inner periphery, are formed at a plurality of positions (three positions in the illustrated example) of the rotation suppressing member 70 in the circumferential direction. A plurality of engaging portions to be inserted into the recessed portions 71 of the rotation suppressing member 70 are provided to the housing 40. In this embodiment, the extending portions 41 (see FIG. 2 and FIG. 3) of the housing 40, which are arranged between the cylindrical rollers 15 of the first clutch part 10, are used as the engaging portions. A circumferential pitch of the recessed portions 71 of the rotation suppressing member 70 and a circumferential pitch of the extending portions 41 of the housing 40 are equal to each other. In the illustrated example, both of the recessed portions 71 and the extending portions 41 are formed equiangularly. Each recessed portion 71 and each extending portion 41 are fitted together with a play in the circumferential direction. When the extending portions 41 of the housing 40 are engaged with inner surfaces of the recessed portions 71 of the rotation suppressing member 70 in both of the rotating directions, the rotation stopping mechanisms 80 configured to restrict the rotation of the rotation suppressing member 70 in both of the directions are formed.

As described above, when the recessed portions 71 (engaged portions) of the rotation suppressing member 70 and the extending portions 41 (engaging portions) of the housing 40 are engaged with each other in both of the rotating directions, the rotation of the rotation suppressing member 70 is restricted in both of the directions. As a result, when the operating lever 61 is returned to the neutral position, the dragging of the outer ring 14, which may be caused via the rotation suppressing member 70 along with the rotation of the input rotary body (the inner ring 13, the operating bracket 12, and the side plate 11) in the returning direction, can be more reliably prevented.

The present invention is not limited to the above-mentioned embodiment. Now, description is made of other embodiment of the present invention. However, the same points as those in the above-mentioned embodiment are denoted by the same reference symbols, and redundant description thereof is omitted.

The engaged portions (recessed portions 71) of the rotation suppressing member 70 and the engaging portions (extending portions 41) of the housing 40 may be brought into abutment against each other with interferences in the circumferential direction therebetween. For example, as illustrated in FIG. 8, the extending portions 41 of the housing 40 may be press-fitted into the recessed portions 71 of the rotation suppressing member 70 in the circumferential direction. In this case, before the assembly of the rotation suppressing member 70 and the housing 40, a width of at least one of the recessed portions 71 of the rotation suppressing member 70 in the circumferential direction is slightly smaller than a width of the extending portion 41 of the housing 40, which is to be fitted thereinto, in the circumferential direction. As a result, the rotation of the rotation suppressing member 70 in both of the directions with respect to the housing 40 is completely restricted. Thus, the dragging of the outer ring 14 can be reliably restricted. Other rotation stopping mechanisms 80, each corresponding to the recessed portion 71 and the extending portion 41 that are fitted together with gaps in the circumferential direction, also function as auxiliary rotation stoppers. However, the auxiliary rotation stoppers may be omitted if not particularly required. Further, in FIG. 8, the extending portion 41 is press-fitted into one of the recessed portions 71 among the recessed portions 71 and the extending portions 41, which are provided at a plurality of positions in the circumferential direction. However, the press-fitting of the extending portions 41 into the recessed portions 71 is not limited to that described above. The extending portions 41 may be press-fitted into a plurality of recessed portions 71 (for example, all the recessed portions 71).

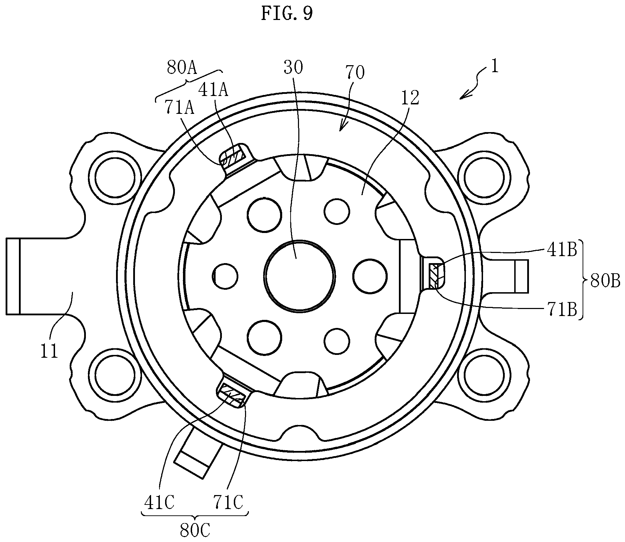

In an embodiment illustrated in FIG. 9, a circumferential pitch of a plurality of recessed portions (referred to as a first recessed portion 71A, a second recessed portion 71B, and a third recessed portion 71C in this case) formed in the rotation suppressing member 70 and a circumferential pitch of a plurality of extending portions (referred to as a first extending portion 41A, a second extending portion 41B, and a third extending portion 41C in this case) of the housing 40 are set to be different from each other. As a result, the first extending portion 41A of the housing 40 is brought into abutment against an inner wall of the first recessed portion 71A of the rotation suppressing member 70 on one side in the circumferential direction with an interference (first rotation stopping mechanism 80A). At the same time, the second extending portion 41B of the housing 40 is brought into abutment against an inner wall of the second recessed portion 71B of the rotation suppressing member 70 on another side in the circumferential direction with an interference (second rotation stopping mechanism 80B). Also in this case, the rotation of the rotation suppressing member 70 in both directions with respect to the housing 40 is completely restricted. Thus, the dragging of the outer ring 14 can be reliably restricted. A third rotation stopping mechanism 80C, which comprises the third recessed portion 71C and the third extending portion 41C that are fitted together with gaps defined in the circumferential direction, functions as an auxiliary rotation stopper. However, the third rotation stopping mechanism 80C may be omitted if not particularly required.

Further, in a case in which the rotation suppressing member 70 has two sides that should be distinguished (specifically, the rotation suppressing member should be oriented in a predetermined direction when mounted into the housing 40), it is preferred that the circumferential pitch of the recessed portions 71 and the circumferential pitch of the extending portions 41 be set so that the recessed portions 71 and the extending portions 41 are fitted together in a desired state (state illustrated in FIG. 9) only when the rotation suppressing member 70 is mounted in the housing 40 while being oriented in the correct direction. As a result, when the rotation suppressing member 70 is mounted into the housing 40 while being oriented in the incorrect direction, the recessed portions 71 and the extending portions 41 are not fitted together properly. Thus, mounting of the rotation suppressing member 70 in the incorrect direction can easily be detected.

A configuration of the rotation stopping mechanism 80 of the rotation suppressing member 70 is not limited to that described above. For example, a recessed portion being open at an outer periphery of the rotation suppressing member 70 or a hole passing through the rotation suppressing member 70 in the axial direction may be formed as the engaged portion. Further, a protruding portion projecting from the rotation suppressing member 70 in a radial direction or the axial direction may be provided as the engaged portion, and a recessed portion configured to be fitted over the protruding portion of the rotation suppressing member 70 in the circumferential direction may be formed in the housing 40 as the engaging portion. Alternatively, a rotation stopping mechanism may be formed by fixing the rotation suppressing member 70 and the housing 40 together through, for example, welding or screwing.

The rotation suppressing member 70 is only required to be disposed between the input rotary body and the output rotary body of the first clutch part 10 in the axial direction so as to be in contact with the input rotary body and the output rotary body. For example, the rotation suppressing member 70 may be disposed between the inner ring 13 and the outer ring 14 in the axial direction or between the side plate 11 and the outer ring 14 in the axial direction so as to be in contact therewith.

In the embodiment described above, the first clutch part has been described as a constant mesh-type clutch in which the cylindrical rollers 15 are pushed to the smaller width sides of the wedge gaps 18 by the roller urging springs 16. However, the first clutch part is not limited to the above-mentioned clutch. For example, the first clutch part may bring the engaging elements into an unengaged state with the inner ring and the outer ring when the operating lever is in the neutral position and pushes the engaging elements to the smaller width sides of the wedge gaps to allow transmission of a torque between the inner ring and the outer ring when the operating lever is operated.

Further, in the embodiment described above, the first clutch part having the inner ring as the input rotary body and the outer ring as the output rotary body has been described. However, the inner ring and the outer ring are interchangeable. The first clutch may have the inner ring as the output rotary body and the outer ring as the input rotary body.

### Reference Signs List

- 1: clutch unit
- 10: first clutch part
- 11: side plate (input rotary body)
- 12: operating bracket (input rotary body)
- 13: inner ring (input rotary body)
- 14: outer ring (output rotary body)
- 15: cylindrical roller (engaging element)
- 16: roller urging spring (urging member)
- 20: second clutch part
- 21: release bracket
- 22: outer ring
- 23: inner ring
- 25: roller urging spring
- 30: output shaft
- 40: housing (static system)
- 41: extending portion (engaging portion)
- 50: seat
- 60: seat lifter device
- 61: operating lever
- 70: rotation suppressing member
- 71: recessed portions (engaged portion)
- 80: rotation stopping mechanism

## Claims

1. A clutch unit, comprising:
a static system;
an output shaft configured to be rotatable with respect to the static system;
a first clutch part, which comprises an input rotary body, an output rotary body, and a plurality of engaging elements disposed between the input rotary body and the output rotary body, and is configured to transmit a rotational torque, which is generated when the input rotary body is rotated from a neutral position, to the output rotary body and shut off a rotational torque, which is generated when the input rotary body is returned to the neutral position;
a second clutch part configured to transmit a rotational torque of the output rotary body of the first clutch part to the output shaft and shut off a rotational torque from the output shaft to the output rotary body of the first clutch part;
a rotation suppressing member configured to apply rotational resistance to the output rotary body; and
a rotation stopping mechanism configured to restrict rotation of the rotation suppressing member with respect to the static system.

2. The clutch unit according to claim 1, wherein the rotation stopping mechanism comprises:
an engaging portion provided to the static system; and
an engaged portion, which is provided to the rotation suppressing member, and is configured to be fitted over the engaging portion in a circumferential direction.

3. The clutch unit according to claim 2, wherein the engaging portion and the engaged portion are brought into abutment against each other with an interference in a circumferential direction therebetween.

4. The clutch unit according to claim 1,
wherein the rotation stopping mechanism comprises:
a plurality of engaging portions provided to the static system; and
a plurality of engaged portions, which are provided to the rotation suppressing member, and are configured to be fitted over the plurality of engaging portions in a circumferential direction, and
wherein a circumferential pitch of the plurality of engaging portions and a circumferential pitch of the plurality of engaged portions are set to be different from each other.

5. The clutch unit according to any one of claims 1 to 4, wherein the first clutch part comprises:
a wedge gap defined between the input rotary body and the output rotary body; and
an urging member configured to urge the engaging elements toward smaller width sides of the wedge gap.
